(19) **Europäisches Patentamt / European Patent Office / Office européen des brevets**

(11) **EP 4 678 614 A1**

(12) # EUROPEAN PATENT APPLICATION
published in accordance with Art. 153(4) EPC

(43) Date of publication:
**14.01.2026 Bulletin 2026/03**

(21) Application number: **24766970.8**

(22) Date of filing: **27.02.2024**

(51) International Patent Classification (IPC):
*C04B 7/44* (2006.01)     *B01D 53/62* (2006.01)
*B01D 53/74* (2006.01)     *B01D 53/78* (2006.01)
*B01D 53/81* (2006.01)     *C04B 7/38* (2006.01)

(52) Cooperative Patent Classification (CPC):
**B01D 53/62; B01D 53/74; B01D 53/78;
B01D 53/81; C04B 7/38; C04B 7/44**

(86) International application number:
**PCT/JP2024/007145**

(87) International publication number:
**WO 2024/185599 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2023 JP 2023035326**

(71) Applicant: **Sumitomo Osaka Cement Co., Ltd.
Tokyo, 105-8641 (JP)**

(72) Inventors:
• **NAKAYAMA Shin
Tokyo 105-8641 (JP)**
• **OKADA Yutaka
Tokyo 105-8641 (JP)**

(74) Representative: **Müller-Boré & Partner
Patentanwälte PartG mbB
Friedenheimer Brücke 21
80639 München (DE)**

(54) **CEMENT FIRING FACILITY AND FIRING METHOD**

(57)     Provided are a cement firing facility and a firing method in a cement firing facility, in which combustion exhaust gas produced in a cement firing facility is effectively utilized to increase the carbon dioxide concentration exhausted from the cement firing facility and to efficiently recover carbon dioxide, and combustibility of fuel is improved to improve a heat efficiency of the cement firing facility.

FIG. 3

EP 4 678 614 A1

**Description**

TECHNICAL FIELD

The present disclosure relates to a cement firing facility and a firing method.

BACKGROUND

Recently, the interest in global warming has increased, and a reduction in emissions of carbon dioxide to the atmosphere has been required. In various facilities such as a power plant, an incinerator, a cement plant, an iron mill, or a plant facility, a method for separating and recovering carbon dioxide in exhaust gas containing carbon dioxide that is produced by an operation to reduce emissions of the exhaust gas to the atmosphere is considered. In particular, a reduction in emissions of carbon dioxide in the cement plant is regarded as an urgent issue.

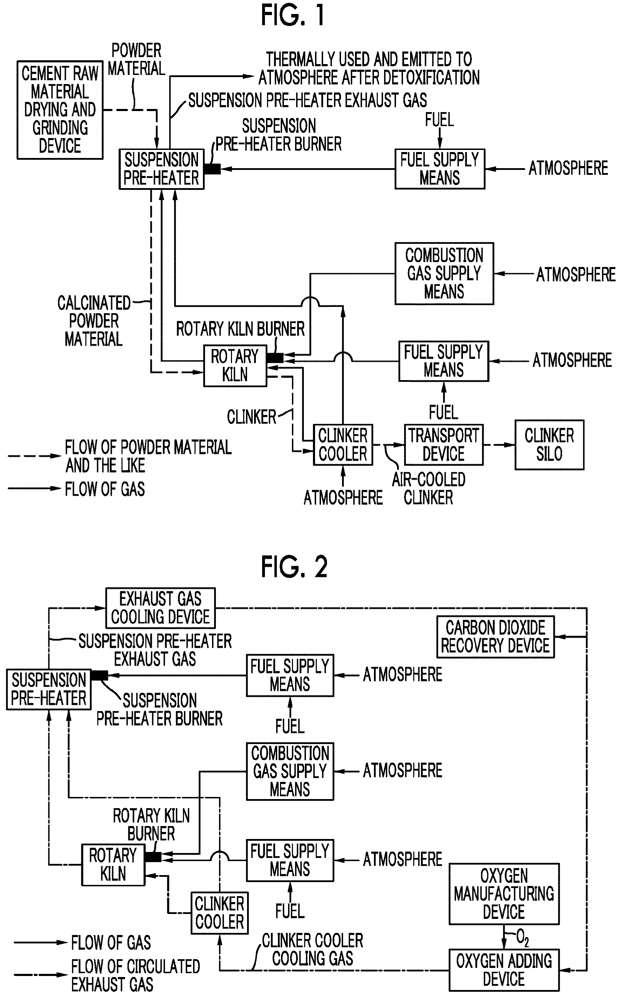

Examples of a general cement firing facility include a facility having a configuration illustrated in FIG. 1. The cement firing facility illustrated in FIG. 1 includes a drying and grinding device configured to dry and grind a cement raw material to obtain a powder material, a suspension pre-heater configured to pre-heat and calcinate the powder material, a rotary kiln configured to fire the pre-heated and calcinated powder material to obtain a cement clinker, and a clinker cooler configured to cool the cement clinker.

A part of air (about 700°C to 900°C) that is heated to a high temperature due to heat exchange with the cement clinker in the clinker cooler is introduced into the suspension pre-heater and used as combustion air for fuel. The suspension pre-heater uses the high-temperature air (about 700°C to 900°C) introduced from the clinker cooler as a part of combustion air to combust fuel. As a result, the powder material is pre-heated and calcinated, and limestone that is a main raw material is decomposed ($CaCO_3 \rightarrow CaO + CO_2$) at about 800°C to 900°C. The calcinated powder material is sent to the rotary kiln and fired.

On the other hand, combustion gas including gas that is produced by calcination is used for pre-heating the powder material that is supplied from the uppermost stage and sequentially falls downward, and subsequently is exhausted from the suspension pre-heater. The exhaust gas (about 350°C) of the suspension pre-heater is thermally used, for example, for drying a cement raw material, and subsequently is emitted to the atmosphere after a detoxification treatment such as dust removal.

The rotary kiln uses the high-temperature air (about 800°C to 1000°C) introduced from the front stage of the clinker cooler as combustion air to combust the fuel. As a result, the calcinated powder material is fired to manufacture a cement clinker (about 1450°C). More specifically, by firing the calcinated powder material mainly containing silicon oxide ($SiO_2$), aluminum oxide ($Al_2O_3$), iron oxide ($Fe_2O_3$), calcium oxide (CaO) produced by calcination, and the like, a cement clinker containing minerals such as tricalcium silicate ($3CaO \cdot SiO_2$ (C3S)), dicalcium silicate ($2CaO \cdot SiO_2$ (C2S)), tricalcium aluminate ($3CaO \cdot Al_2O_3$ (C3A)), and tetracalcium aluminoferrate ($4CaO \cdot Al_2O_3 \cdot Fe_2O_3$ (C4AF)) is obtained.

The cement clinker obtained as described above is air-cooled by the clinker cooler to a temperature (about 160°C) at which the cement clinker can be transported, and is stored in a clinker silo.

In addition, gas (about 1000°C) containing combustion exhaust gas produced by clinker calcination is introduced into the lower stage of the suspension pre-heater from the rear of the rotary kiln, is used for pre-heating the powder material, and is subsequently exhausted by the suspension pre-heater.

In the cement firing facility in the related field described above, various efforts have been made to reduce the exhaust amount of carbon dioxide.

For example, it is considered to reduce the exhaust amount of carbon dioxide originating from fossil energy by using a combustible waste such as waste plastic as an alternative to fossil fuel (for example, Patent Literature No. 1).

In addition, a method for recovering carbon dioxide in a cement firing facility includes a process of cooling exhaust gas exhausted from a suspension pre-heater, a dehumidification process of removing water vapor in the cooled exhaust gas, a process of adding oxygen to the dehumidified exhaust gas, a circulation process of circulating and using the exhaust gas to which oxygen is added as cooling gas of a clinker cooler, a process of concentrating carbon dioxide, and a liquefaction process of extracting a part of exhaust gas obtained by concentrating carbon dioxide on an upstream where oxygen is added to liquefy carbon dioxide (for example, Patent Literature No. 2).

Citation List

Patent Literature

Patent Literature No. 1: Japanese Laid-open Patent Publication No. 2018-52746

Patent Literature No. 2: Japanese Laid-open Patent Publication No. 2008-239359

SUMMARY OF INVENTION

Technical Problem

In the cement firing facility in the related field having the configuration illustrated in FIG. 1, in addition to carbon dioxide originating from energy that is produced by combusting the fuel in the suspension pre-heater and the rotary kiln, carbon dioxide originating from non-energy is produced by calcination.

The concentration of the carbon dioxide originating from non-energy is 100% in principle, and it is known that the amount thereof produced is 1.5 to 2.0 times that of the carbon dioxide originating from energy.

On the other hand, in order to combust fuel, the high-temperature air introduced from the clinker cooler is used as the combustion gas. Therefore, the combustion exhaust gas contains a large amount of nitrogen gas in air. Therefore, the carbon dioxide concentration in the combustion exhaust gas containing the carbon dioxide originating from energy is low. In addition, the carbon dioxide originating from non-energy is joined with the combustion exhaust gas, and thus the carbon dioxide concentration in the exhaust gas exhausted from the suspension pre-heater is also low.

In addition, air is used as means for cooling the clinker and supplying the fuel in the clinker cooler, and thus the carbon dioxide concentration in the exhaust gas of the suspension pre-heater further decreases.

Only with the method described in Patent Literature No. 1 for utilizing an alternative fuel to fossil fuel, for example, biomass or waste plastic, the exhaust amount of the carbon dioxide originating from non-energy cannot be reduced. Therefore, it cannot be said that this method is sufficient as a solution for reducing the exhaust amount of carbon dioxide.

In addition, in the method disclosed in Patent Literature No. 2, a device configured with a flow illustrated in a schematic diagram of FIG. 2 is adopted. In the method disclosed in Patent Literature No. 2, a device that recovers carbon dioxide in exhaust gas in the cement firing facility is provided to facilitate a reduction in emissions of carbon dioxide to the atmosphere. Further, by using and circulating the exhaust gas as cooling gas of the clinker cooler while adding oxygen to the exhaust gas, the concentration of carbon dioxide in the exhaust gas is improved, and carbon dioxide is efficiently recovered in a carbon dioxide recovery device. However, the use of the exhaust gas to be circulated (hereinafter, also referred to as "circulated exhaust gas") is limited to the use as the cooling gas of the clinker cooler, and there is room for improvement for further improving the carbon dioxide concentration in the exhaust gas to efficiently recover carbon dioxide.

The present invention has been made under these circumstances, and an object thereof is to provide a cement firing facility and a firing method in a cement firing facility, in which combustion exhaust gas produced in a cement firing facility is effectively utilized to increase the carbon dioxide concentration exhausted from the cement firing facility and to efficiently recover carbon dioxide, and combustibility of fuel is improved to improve a heat efficiency of the cement firing facility.

Solution to Problem

In order to achieve the above object, the present invention provides the following cement firing facility.

1. A cement firing facility including:

a drying and grinding device configured to dry and grind a cement raw material to obtain a powder material;
a suspension pre-heater configured to pre-heat and calcinate the powder material;
a rotary kiln configured to fire the pre-heated and calcinated powder material to obtain a cement clinker;
a clinker cooler configured to cool the cement clinker;
an exhaust gas cooling device configured to cool exhaust gas exhausted from the suspension pre-heater;
an exhaust gas circulation path that includes an oxygen adding device configured to add oxygen to the exhaust gas cooled in the exhaust gas cooling device and where the exhaust gas to which oxygen is added in the oxygen adding device is circulated and used as cooling gas of the clinker cooler;
a carbon dioxide recovery device configured to extract partial exhaust gas A from the exhaust gas that is cooled in the exhaust gas cooling device and to which oxygen is not yet added in the oxygen adding device, and to recover carbon dioxide from the exhaust gas A; and
a fuel supply system including mixed gas preparation means for extracting partial exhaust gas B from the exhaust gas and mixing the exhaust gas B and oxygen to prepare mixed gas, and fuel supply means for inserting fuel into the mixed gas to supply the mixed gas including the fuel.
Further, the present invention provides the following cement firing facility as a preferable embodiment.

2. The cement firing facility according to 1, in which the fuel is a combustible solid.

3. The cement firing facility according to 2, in which the combustible solid is at least one selected from fossil fuel, a combustible waste, and renewable fuel.

4. The cement firing facility according to 1 or 2, in which the mixed gas preparation means includes flow control means 1 of the exhaust gas B and flow control means 1 of the oxygen.

5. The cement firing facility according to 1 or 2, in which the mixed gas preparation means includes mixed gas flow control means for performing a flow control of the mixed gas.

6. The cement firing facility according to 1 or 2, in which the mixed gas preparation means further includes means for mixing carbon dioxide recovered in the carbon dioxide recovery device.

7. The cement firing facility according to 1 or 2, in which a supply destination of the mixed gas including the fuel is at least one selected from a burner in the suspension pre-heater and a burner in the rotary kiln.

8. The cement firing facility according to 1 or 2, further including a combustion gas supply system including combustion gas preparation means for extracting partial exhaust gas C from the exhaust gas and mixing the exhaust gas C and oxygen to prepare combustion gas, and combustion gas supply means for supplying the combustion gas to a burner in the rotary kiln.

9. The cement firing facility according to 8, in which the combustion gas adjustment means includes flow control means 2 of the exhaust gas C and flow control means 2 of the oxygen.

10. The cement firing facility according to 8, in which the combustion gas preparation means includes combustion gas flow control means for performing a flow control of the combustion gas.

11. The cement firing facility according to 8, in which the combustion gas preparation means further mixes the carbon dioxide recovered in the carbon dioxide recovery device.

In addition, the present invention provides the following firing method in a cement firing facility.

12. A firing method in a cement firing facility including

a drying and grinding device configured to dry and grind a cement raw material to obtain a powder material,
a suspension pre-heater configured to pre-heat and calcinate the powder material,
a rotary kiln configured to fire the pre-heated and calcinated powder material to obtain a cement clinker,
a clinker cooler configured to cool the cement clinker,
an exhaust gas cooling device configured to cool exhaust gas exhausted from the suspension pre-heater,
an exhaust gas circulation path that includes an oxygen adding device configured to add oxygen to the exhaust gas cooled in the exhaust gas cooling device and where the exhaust gas to which oxygen is added in the oxygen adding device is circulated and used as cooling gas of the clinker cooler,
a carbon dioxide recovery device configured to extract partial exhaust gas A from the exhaust gas that is cooled in the exhaust gas cooling device and to which oxygen is not yet added in the oxygen adding device, and to recover carbon dioxide from the exhaust gas A, and
a fuel supply system including mixed gas preparation means for extracting partial exhaust gas B from the exhaust gas and mixing the exhaust gas B and oxygen to prepare mixed gas, and fuel supply means for inserting fuel into the mixed gas to supply the mixed gas including the fuel,
the firing method comprising performing the pre-heating and calcination of the powder material and the firing of the pre-heated and calcinated powder material using the fuel supply system.

The present invention provides the following firing method in a cement firing facility as a preferable embodiment.

13. The firing method in the cement firing facility according to 12,

in which the cement firing facility further includes a combustion gas supply system including combustion gas preparation means for extracting partial exhaust gas C from the exhaust gas and mixing the exhaust gas C and oxygen to prepare combustion gas, and combustion gas supply means for supplying the combustion gas to a burner in the rotary kiln, and
the combustion gas is supplied to the burner in the rotary kiln using the combustion gas supply system.

Advantageous Effects of Invention

According to the present invention, combustion exhaust gas produced in a cement firing facility can be effectively utilized to increase the carbon dioxide concentration exhausted from the cement firing facility and to efficiently recover carbon dioxide, and combustibility of fuel can be improved to improve a heat efficiency of the cement firing facility.

BRIEF DESCRIPTION OF DRAWINGS

[FIG. 1] A schematic diagram illustrating a cement firing facility in the related field (Patent Literature No. 1).
[FIG. 2] A schematic diagram illustrating a cement firing facility in the related field (Patent Literature No. 2).
[FIG. 3] A schematic diagram illustrating one preferable aspect of a cement firing facility according to the present embodiment.
[FIG. 4] A schematic diagram illustrating one preferable aspect of a fuel supply system.
[FIGS. 5-1 to 5-3] Schematic diagrams illustrating one preferable aspect of a shape of a flow path of a burner of the fuel supply system and a suspension pre-heater.
[FIG. 6] A cross-sectional view illustrating one preferable aspect of a shape of a flow path of a rotary kiln burner.
[FIG. 7] A schematic diagram illustrating one preferable aspect of a combustion gas supply system of the rotary kiln burner.
[FIG. 8] A schematic diagram illustrating one preferable aspect of the combustion gas supply system.
[FIG. 9] A schematic diagram illustrating a configuration of a cement firing facility used in Example 1.

DESCRIPTION OF EMBODIMENTS

Hereinafter, an embodiment of the present invention (hereinafter, also referred to as "present embodiment") will be described. The present invention is not limited to the following embodiment, and any changes can be made within a range where the effects of the present invention do not deteriorate. The notation of a numerical range of "AA to BB" in the present specification means "AA or more and BB or less". In addition, in the present specification, numerical values regarding "or more", "or less", and "to" that relate to the description of a numerical range are any combination of numerical values. For example, when "CC to DD" and "EE to FF" in a certain numerical range are described, numerical ranges such as "CC to FF" and "EE to DD" are also included.

[Cement Firing Facility]

A cement firing facility according to the present embodiment includes:

a drying and grinding device configured to dry and grind a cement raw material to obtain a powder material;
a suspension pre-heater configured to pre-heat and calcinate the powder material;
a rotary kiln configured to fire the pre-heated and calcinated powder material to obtain a cement clinker;
a clinker cooler configured to cool the cement clinker;
an exhaust gas cooling device configured to cool exhaust gas exhausted from the suspension pre-heater;
an exhaust gas circulation path that includes an oxygen adding device configured to add oxygen to the exhaust gas cooled in the exhaust gas cooling device and where the exhaust gas to which oxygen is added in the oxygen adding device is circulated and used as cooling gas of the clinker cooler;
a carbon dioxide recovery device configured to extract partial exhaust gas A from the exhaust gas that is cooled in the exhaust gas cooling device and to which oxygen is not yet added in the oxygen adding device, and to recover carbon dioxide from the exhaust gas A, and
a fuel supply system including mixed gas preparation means for extracting partial exhaust gas B from the exhaust gas and mixing the exhaust gas B and oxygen to prepare mixed gas, and fuel supply means for inserting fuel into the mixed gas to supply the mixed gas including the fuel.

As described above, it cannot be said that the method described in Patent Literature No. 1 for utilizing an alternative fuel to fossil fuel, for example, biomass or waste plastic is sufficient for reducing the exhaust amount of carbon dioxide. In addition, in the method described in Patent Literature No. 2, the use of the exhaust gas is limited to the use as the cooling gas of the clinker cooler, and there is room for further improvement for efficiently recovering carbon dioxide in a carbon dioxide recovery device. In addition, improvement of the heat efficiency by improvement of combustibility of fuel is not considered at all.
The cement firing facility according to the present embodiment adopts a fuel supply system in which, for example, fuel such as a combustible solid is inserted into mixed gas where exhaust gas and oxygen are mixed as an alternative to air such that the fuel and the mixed gas can be supplied to the cement firing facility. By adopting the fuel supply system, in addition to the use as the cooling gas of the clinker cooler, for example, circulated exhaust gas can be used by supplying not only the fuel but also the mixed gas to a burner in each of the instruments such as the rotary kiln or the suspension pre-heater. By replacing air with the mixed gas, nitrogen in the air can be reduced, and the carbon dioxide concentration in the exhaust gas of the suspension pre-heater can be increased.

Thus, carbon dioxide exhausted from the cement firing facility can be efficiently recovered in the carbon dioxide recovery device, and the heat efficiency of the cement firing facility can be improved.

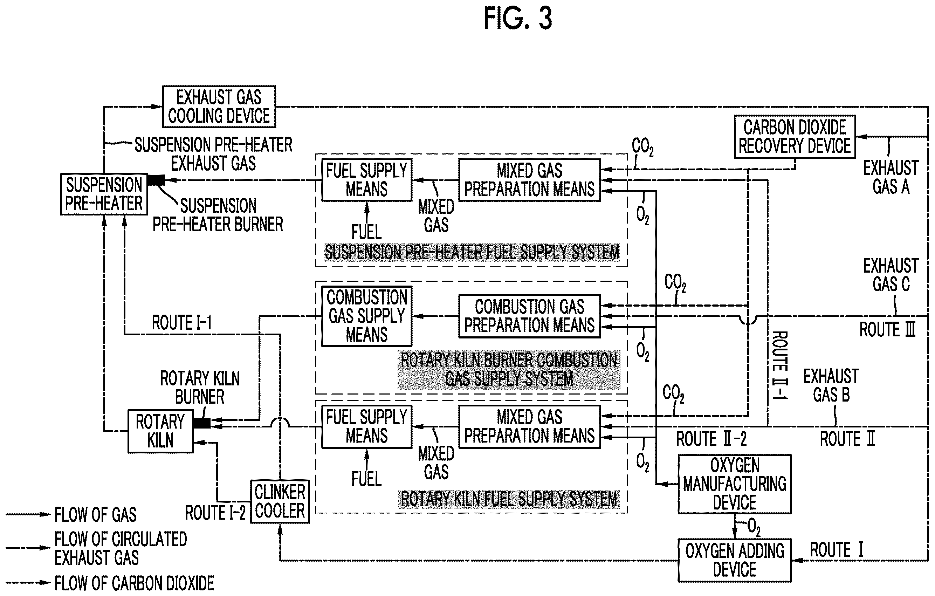

Hereinafter, the cement firing facility according to the present embodiment will be described using FIG. 3. FIG. 3 is a schematic diagram illustrating one preferable aspect of the cement firing facility according to the present embodiment.

FIG. 3 illustrates the cement firing facility according to the present embodiment including the suspension pre-heater, the rotary kiln, and the clinker cooler, including the exhaust gas cooling device, the oxygen adding device, the exhaust gas circulation path, and the carbon dioxide recovery device, and including the fuel supply system that includes the mixed gas preparation means and the fuel supply means.

The cement firing facility according to the present embodiment includes devices used in a general cement firing facility, that is, the drying and grinding device, the suspension pre-heater, the rotary kiln, and the clinker cooler. As these instruments, devices used in the related field can be used. In addition, as a cement raw material, a raw material used in the related field can be used without any particular limitation.

In addition, the carbon dioxide recovery device can be appropriately selected from a liquid absorption type, a membrane separation type, a solid adsorption type, a compression and liquefaction recovery type, and the like.

[Instruments and Devices Used for Circulation of Exhaust Gas]

In addition to the instruments used for manufacturing the cement clinker, the cement firing facility according to the present embodiment includes the exhaust gas cooling device configured to cool the exhaust gas of the suspension pre-heater, and the exhaust gas circulation path including the oxygen adding device. As illustrated in FIG. 3, in the cement firing facility according to the present embodiment, the exhaust gas exhausted from the suspension pre-heater is circulated in the following routes.

Route I-1: a route where the exhaust gas is circulated in the exhaust gas cooling device, the oxygen adding device, the clinker cooler, and the suspension pre-heater.

Route I-2: a route where the exhaust gas is circulated in the exhaust gas cooling device, the oxygen adding device, the clinker cooler, the rotary kiln, and the suspension pre-heater.

Route II-1: a route where exhaust gas B that is partially extracted from the exhaust gas exhausted from the exhaust gas cooling device is circulated in the mixed gas preparation means, the fuel supply means, and the suspension pre-heater.

Route II-2: a route where the exhaust gas B is circulated in the mixed gas preparation means, the fuel supply means, the rotary kiln, and the suspension pre-heater.

Route III: a route where exhaust gas C that is partially extracted from the exhaust gas exhausted from the exhaust gas cooling device is circulated in the mixed gas preparation means, the fuel supply means, the rotary kiln, and the suspension pre-heater.

In the cement firing facility according to the present embodiment, the exhaust gas can be effectively used by adopting the configuration the route II in addition to the circulation route I of the exhaust gas, and the exhaust amount of the combustion exhaust gas exhausted from the suspension pre-heater can be reduced to further increase the carbon dioxide concentration in the exhaust gas. Therefore, carbon dioxide can be efficiently recovered in the carbon dioxide recovery device.

Further, by including the route III, the exhaust gas can be more effectively used, and the exhaust amount of the combustion exhaust gas can be reduced to further increase the carbon dioxide concentration in the exhaust gas. Therefore, carbon dioxide can be more efficiently recovered in the carbon dioxide recovery device.

The fuel that is supplied in the fuel supply system can be adopted without any particular limitation as long as it is combustible. Any of a combustible gas, a combustible liquid, and a combustible solid can be adopted, but a combustible solid is suitably used.

The reason for this is that the combustible solid has lower combustibility than the combustible liquid, the combustible gas, or the like, and the improvement effect of combustibility obtained by increasing the oxygen concentration in the mixed gas is more significantly exhibited.

The combustible solid corresponds to a material in a solid form or powder form, and main examples thereof include: fossil fuel such as ground coal or oil coke; a waste material such as crushed waste plastic, waste bone meal powder, crushed waste tire, or textile waste; and renewable fuel including wood biomass fuel such as sawdust, sawdust charcoal, or briquettes, biomass fuel such as grass biomass fuel obtained by performing a treatment such as carbonization, semi-carbonization, or pelletization on various grasses such as mown grass, native grass, or forage crop, or crushed wood chips.

Here, the solid form refers to a combustible solid including a solid having a maximum length of 5 mm or more, and the powder form refers to a combustible solid including a solid having a maximum length of less than 5 mm.

The solid-form combustible solid corresponds to the crushed waste plastic, the crushed wood chips, or the like, and the powder-form combustible solid corresponds to the ground coal, the oil coke, the waste bone meal powder, or the like.

These combustible solids have different characteristics, shapes, and combustibility depending on the kinds. Therefore, it is preferable that the fuel supply system is provided for each of the kinds of the combustible solids.

The combustion exhaust gas (exhaust gas B) of the route II is introduced into the fuel supply system and is mixed with oxygen manufactured by an oxygen manufacturing device in the mixed gas preparation means such that the oxygen concentration can be adjusted to a target value suitable for the combustibility of the fuel. As a result, the combustibility of the fuel can be improved, the combustion state can be adjusted to be suitable for clinker manufacturing (calcination and firing), and the heat efficiency of the cement firing facility can be improved.

It is preferable that the fuel supply system is provided for each kind of fuel. As a result, the oxygen concentration can be adjusted depending on the combustibility of each kind of fuel. Therefore, the heat efficiency of the cement firing facility can be more suitably improved.

In addition, from the same viewpoint as described above, it is preferable that the fuel supply system is provided for each supply destination. That is, as illustrated in FIG. 3, it is preferable that a suspension pre-heater fuel supply system is provided for supply to the suspension pre-heater, and a rotary kiln fuel supply system is provided for supply to the rotary kiln.

[Fuel Supply System]

The cement firing facility according to the present embodiment includes the fuel supply system. The fuel supply system includes the mixed gas preparation means and the fuel supply means, inserts the fuel into the mixed gas, and supplies the mixed gas including the fuel to the cement firing facility. In order to supply the fuel, by using the exhaust gas (mixed gas) to which oxygen is added instead of air, the concentration of carbon dioxide in the cement firing facility can be increased. Therefore, carbon dioxide can be efficiently recovered in the carbon dioxide recovery device.

In addition, by adopting the supply system, fixed-rate supply to the supply destination is likely to be performed, and the flow rate and the oxygen concentration of the mixed gas can be adjusted depending on transport characteristics and combustibility of the fuel that is supplied at a fixed rate. As a result, the fuel is likely to be stably supplied to the cement firing facility at a fixed rate, and the oxygen concentration can be adjusted to a value suitable for the combustibility of the fuel. Therefore, combustion suitable for the cement firing facility can be performed, and the heat efficiency is improved.

(Setting of Target Value of Mixed Gas Mass Flow Rate)

A mass flow rate target value of the mixed gas can be determined from the following expression based on a flow rate target value and a solid-to-gas ratio of the fuel.

$$Wz = W/m \qquad (1)$$

(In Expression (1), Wz (kg/h): the mixed gas mass flow rate target value, W (kg/h): the fuel flow rate target value, and m (-): the solid-to-gas ratio).

The solid-to-gas ratio m is a numerical value that can be determined based on an experiment, an experience, and the like depending on the kind and shape of the solid fuel, the circumstances of a transport path such as a transport distance, and the like.

For example, the solid-to-gas ratio m of the ground coal is preferably 0.1t - powder/t - mixed gas or more, more preferably 0.5t - powder/t - mixed gas or more, and still more preferably 1.0t - powder/t - mixed gas or more, and the upper limit is preferably 3.0t - powder/t - mixed gas or less, more preferably 2.5t - powder/t - mixed gas or less, and still more preferably 2.0t - powder/t - mixed gas or less. When the solid-to-gas ratio m is 3.0t - powder/t - mixed gas or less (when the ratio of the fuel to the mixed gas is a fixed rate or less), the fuel is likely to be transported, and clogging of a transport pipe is not likely to occur. When the solid-to-gas ratio m is 0.5t - powder/t - mixed gas or more (when the ratio of the fuel to the mixed gas is a fixed rate or more), the fuel is likely to be transported, the amount of the mixed gas is suppressed, and pressure loss of the transport path can be suppressed, which is economical.

From the same viewpoint as described above, in the case of the crushed waste plastic, the solid-to-gas ratio m is preferably 0.1t - powder/t - mixed gas or more, and more preferably 0.15t - powder/t - mixed gas or more, and the upper limit is preferably 1.5t - powder/t - mixed gas or less, more preferably 1.3t - powder/t - mixed gas or less, and still more preferably 1.0t - powder/t - mixed gas or less. In addition, the solid-to-gas ratio m of the crushed wood chips is the same as that of the crushed waste plastic.

(Setting of Mixed Gas Oxygen Concentration (volume ratio) Target Value)

The target value of the oxygen concentration in the mixed gas is desirably set depending on the combustibility of the fuel, that is, the kind of the fuel. The oxygen concentration in the mixed gas is preferably 23% by volume or more, more preferably 25% by volume or more, still more preferably 27% by volume or more, and still more preferably 28% by volume or more, and the upper limit is preferably 40% by volume or less and more preferably 35% by volume or less. When the oxygen concentration is 23% by volume or more, the combustibility of oxygen is improved, the combustion state is improved. Therefore, the flame temperature is improved. On the other hand, when the oxygen concentration is 40% by volume or less, an increase in flame temperature is suppressed, and occurrence of a problem such as fire damage of the facility is suppressed.

(Setting of Oxygen Flow Rate (Volume) Target Value and Exhaust Gas Flow Rate (Volume) Target Value)

Using the mass flow rate target value of the mixed gas that can be set from Expression (1) and the target value of the oxygen concentration (volume ratio) in the mixed gas, a volume flow rate target value of oxygen and a volume flow rate target value of the exhaust gas can be determined using the following method.

Due to a balance between a gas volume flow rate and a gas mass flow rate, relationships represented by the following expressions are satisfied. Each of reference numerals in the following expressions is represented by the following table.

[Table 1]

|  | Unit | Mixed Gas | Oxygen | Exhaust Gas |
|---|---|---|---|---|
| Mass Flow Rate Target Value | kg/h | Wz | Wx | Wy |
| Volume Flow Rate Target Value | $Nm^3$/h | Qz | Qx | Qy |
| Gas Density | kg/$Nm^3$ | - | px | py |
| Oxygen Concentration Target Value (Volume Ratio) | - | Oz | - | - |

(Balance of Gas Volume Flow Rate)

$$Qz = Qx + Qy \quad (2)$$

$$Qx = Qz \times Oz = (Qx + Qy) \times Oz \quad (3)$$

(Balance of Gas Mass Flow Rate)

$$Wz = Wx + Wy = Qx \times \rho x + Qy \times \rho y \quad (4)$$

Here, Expression (3) can be transformed into Expression (3') below.

$$Qy = Qx \times (1 - Oz)/Oz \quad (3')$$

Next, when (3') is substituted into (4) and rearranged, Expression (5) below is derived.

$$Qx = Wz/(\rho x + \rho y \times (1 - Oz)/Oz) \quad (5)$$

By calculating Qx from Expression (5), Qy and Qz can be calculated from Expressions (3') and (2). When the volume flow rate target value Qy of the exhaust gas includes oxygen, the volume flow rate target value Qx of oxygen may be corrected.

(Mixed Gas Preparation Means)

In the mixed gas preparation means, the mixed gas and oxygen are mixed to prepare mixed gas. It is preferable that the cement firing facility according to the present embodiment includes flow control means 1 of the exhaust gas B and flow control means 1 of oxygen. By including the flow control means, the mixed gas and oxygen can be mixed after being adjusted to the oxygen flow rate target value and the exhaust gas flow rate target value determined from the above expressions.

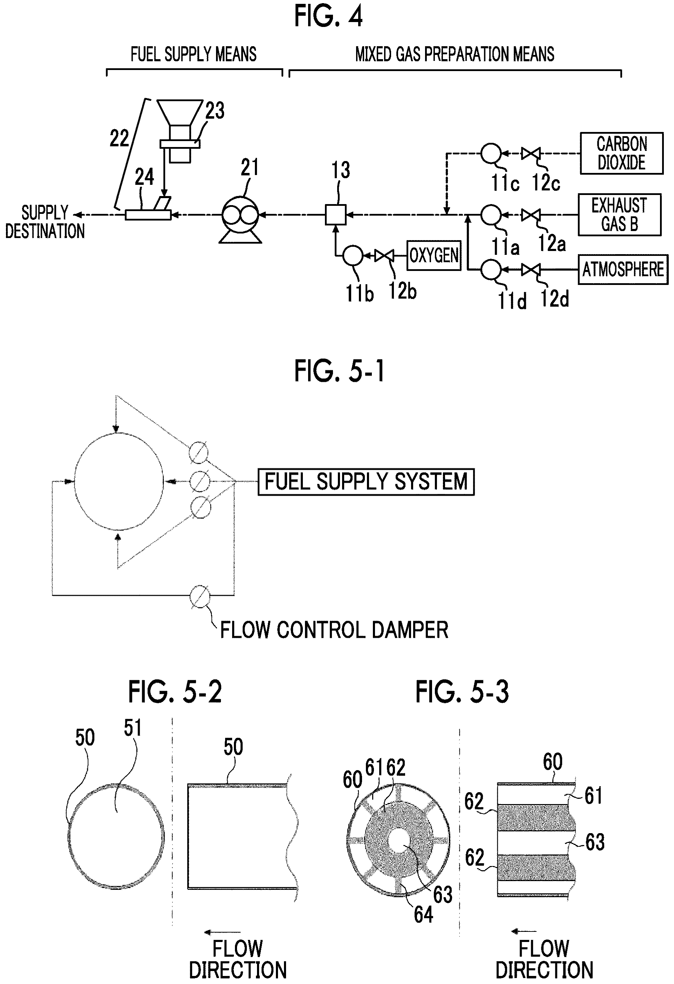

A method for adjusting the flow rates of the exhaust gas and oxygen using the flow control means 1 of the exhaust gas B and the flow control means 1 of oxygen that are preferably provided in the mixed gas preparation means will be described using FIG. 4. FIG. 4 is a schematic diagram illustrating one preferable aspect of mixed gas preparation means and fuel transport fluid supply means in the fuel supply system.

FIG. 4 illustrates a state where flowmeters (11a, 11b, 11c, and 11d, respectively) and flow control valves (12a, 12b, 12c, and 12d, respectively) for adjusting flow rates of the exhaust gas B, oxygen, carbon dioxide, and the atmosphere are provided as the mixed gas preparation means. Oxygen and the exhaust gas of which the flow controls are adjusted are mixed in a mixer 13. As the mixer 13, for example, a mixer such as an inline mixer can be used.

The flow rate of oxygen can be adjusted by adjusting the flow control valve 12b such that the value of the flowmeter 11b is a target value, and the flow rate of the exhaust gas can be adjusted by adjusting the flow control valve 12a such that the value of the flowmeter 11a is a target value. The flow control may also be automatically performed. In addition, the same also applies to carbon dioxide and the atmosphere.

As illustrated in FIG. 4, the mixed gas preparation means can mix oxygen with carbon dioxide that is recovered and stored in the carbon dioxide recovery device instead of the exhaust gas B.

For example, when the operation of a cement firing device starts, the exhaust gas circulation is not sufficient, and the carbon dioxide concentration in the circulated exhaust gas may be low. Even in this case, by using the recovered carbon dioxide, the carbon dioxide concentration in the circulated exhaust gas can be rapidly increased, and a switching time to a normal operation where the circulated exhaust gas is used for the mixed gas can be reduced.

As illustrated in FIG. 4, the fuel supply system can also use air alone instead of the mixed gas.

As a result, when a problem occurs in the mixed gas preparation means, by switching the mixed gas to air, the supply of the fuel can be continued, and the operation of the cement firing facility can be continued. This way, the firing facility according to the present embodiment can also support any circumstances.

(Fuel Supply Means)

The fuel supply means is means for inserting the fuel into the mixed gas and supplying the fuel to the cement firing facility together with the mixed gas. The description will be made using FIG. 4.

The mixed gas preparation means illustrated in FIG. 4 includes a blower 21 and a fuel supply device 22, and the fuel supply device 22 includes a fixed-rate supply device 23 and an ejector 24.

The mixed gas that is mixed by the mixer 13 in the mixed gas preparation means is injected into the blower 21 of the fuel supply means. The fuel weighed by the fixed-rate supply device 23 is introduced by the ejector 24 into the mixed gas discharged from the blower 21, and supplied to the cement firing facility. As a result, the mixed gas where the oxygen concentration is adjusted and the fuel are likely to be supplied at a fixed rate, the carbon dioxide concentration in the exhaust gas of the suspension pre-heater can be easily improved, and the combustibility of the fuel is likely to be improved, and the heat efficiency of the cement firing facility is likely to be improved.

Examples of the supply destination of the fuel supply system include a burner in the suspension pre-heater and a burner in the rotary kiln, and the fuel supply system can be provided for each of the supply destinations.

The suspension pre-heater is not particularly limited as long as a temperature (preferably, 800°C to 900°C) required for calcinating the powder material can be ensured. Therefore, fuel having a relative low heating value can be used. As a result, fuels having a wide range of heating values can be used. Therefore, the fuel can be easily prepared, which also contributes to cost reduction. By supplying the fuel having a relatively low heating value and the mixed gas where the oxygen concentration is adjusted, the combustibility can be improved, and thus the heat efficiency of the cement firing device can be improved.

In the rotary kiln, in order to achieve a temperature (preferably about 1450°C) required for clinker firing, it is preferable that fuel having a high heating value is supplied.

By supplying the mixed gas where the oxygen concentration is adjusted and the fuel having a high heating value, the combustibility can be further improved.

Therefore, the heat efficiency of the cement firing facility can be improved.

The supply can be performed from one fuel supply system to a plurality of burners. By performing combustion using the plurality of burners, the inside of the furnace can be uniformly heated, and thus the heat efficiency of the cement firing facility can be improved. This method is effective in the suspension pre-heater.

The supply can be performed from a plurality of fuel supply systems to one burner having a plurality of flow paths. This method is used to reduce an installation space of the burner not only in the suspension pre-heater but also in the rotary kiln burner. In consideration of the fact that an optimal flame for cement firing can be formed by supplying plural kinds of fuels to one burner for combustion, the method is particularly effective in the rotary kiln burner, and the heat efficiency of the cement firing facility can be improved.

In the suspension pre-heater, by maintaining an ambient temperature of a calcinated portion to be preferably 800°C to 900°C, about 80% of limestone in the powder material is decomposed. In order to maintain this temperature, high-temperature gas containing oxygen introduced from the clinker cooler is introduced, and a part of the combustion gas is used to combust the mixed gas and the fuel supplied from the fuel supply system. FIGS. 5-1 to 5-3 illustrate schematic diagrams (FIG. 5-1) illustrating one preferable aspect of the fuel supply system of which the supply destination is the suspension pre-heater, and are schematic diagrams (FIGS. 5-2 and 5-3) illustrating one preferable aspect of a shape of a flow path of the burner of the suspension pre-heater.

As illustrated in FIGS. 5-1 to 5-3, it is preferable that the fuel supply system where the suspension pre-heater is the supply destination includes a flow control damper as control means capable of performing a single flow control for a plurality of supply destinations in the suspension pre-heater. As a result, the fuel can be accurately supplied to each of the supply destinations. In addition, FIGS. 5-1 to 5-3 illustrate the aspect of the fuel supply system where the supply destination is the suspension pre-heater. However, the same applies to a case where the rotary kiln includes a plurality of supply destinations.

As the burner in the suspension pre-heater, any of a burner having one flow path or a burner having two or more flow paths may be used, and is preferably selectively used depending on the kind and characteristics of the fuel to be used. FIGS. 5-1 to 5-3 are cross-sectional views illustrating one preferable aspect of a shape of a flow path of the burner in the suspension pre-heater. FIG. 5-2 illustrates a shape of a flow path of the burner having one flow path, and FIG. 5-3 illustrates a shape of a flow path of the burner having two or more flow paths.

A burner 50 illustrated in FIG. 5-2 supplies the fuel supplied from the fuel supply system and the mixed gas for combustion, and has a characteristic in which clogging is not likely to occur. Therefore, the burner 50 is preferably used for supplying the solid-form combustible solid among the fuels described above and below.

As a result, oxygen in the mixed gas can promote the combustion of the solid-form combustible solid.

A burner 60 illustrated in FIG. 5-3 includes two flow paths including an outer flow path 61 where a discharge port is divided by seven dispersion plates 64 and a cylindrical flow path 63 that is provided at the center of a plate 62. The burner 60 supplies the mixed gas containing the fuel from the fuel supply system of each of the flow path 61 and the flow path 63, and combusts the mixed gas using one burner.

In addition, any one of the flow path 61 and the flow path 63 may also be used as the flow path of the mixed gas containing the fuel alone for combustion.

The flow path 61 includes the dispersion plate 64, and can improve the dispersibility of the fuel. Therefore, a more homogeneous combustion state can be obtained. In particular, the powder-form combustible solid and the mixed gas can be suitably supplied and combusted.

The flow path 63 can supply the fuel supplied from the fuel supply system different from that of the flow path 61 and the mixed gas. The flow path 63 has a shape where clogging is not likely to occur without including a dispersion plate or the like, and thus can suitably supply and combust the solid-form combustible solid and the mixed gas.

In addition, the combustible liquid or the combustion gas can also be supplied from the flow path 63. By mixing the combustible liquid or the combustible gas having excellent combustibility with the combustible solid and combusting the mixed fuel, the combustion of the combustible solid can be promoted. Therefore, the heat efficiency of the cement firing device can be further improved.

As the fuel, the combustible liquid or the combustible gas can be used without being limited to the combustible solid as described above. For example, the combustible liquid or the combustible gas may also be combusted in only the flow path 63 without supplying the combustible solid from the flow path 61.

Here, main examples of the combustible liquid include: fossil fuel such as kerosene, heavy oil, and recycled oil; a waste material such as waste oil or waste glycerin; and renewable fuel such as bio-oil, waste vegetable oil (for example, vegetable waste cooking oil), or recycled fuel manufactured from other industrial waste. In addition, main examples of the combustible gas include: fossil fuel such as liquefied petroleum gas or natural gas; and carbon-free fuel such as ammonia or hydrogen.

In the rotary kiln, high-temperature gas containing oxygen introduced from the front stage of the clinker cooler introduced as a part of the combustion gas, and the calcinated powder material is fired by the rotary kiln burner. For firing, preferably, a high temperature of about 1450°C is required. Therefore, the rotary kiln burner is required to produce a high-temperature flame.

Therefore, the rotary kiln burner includes not only a flow path for fuel supply but also a flow path for supplying combustion gas including oxygen.

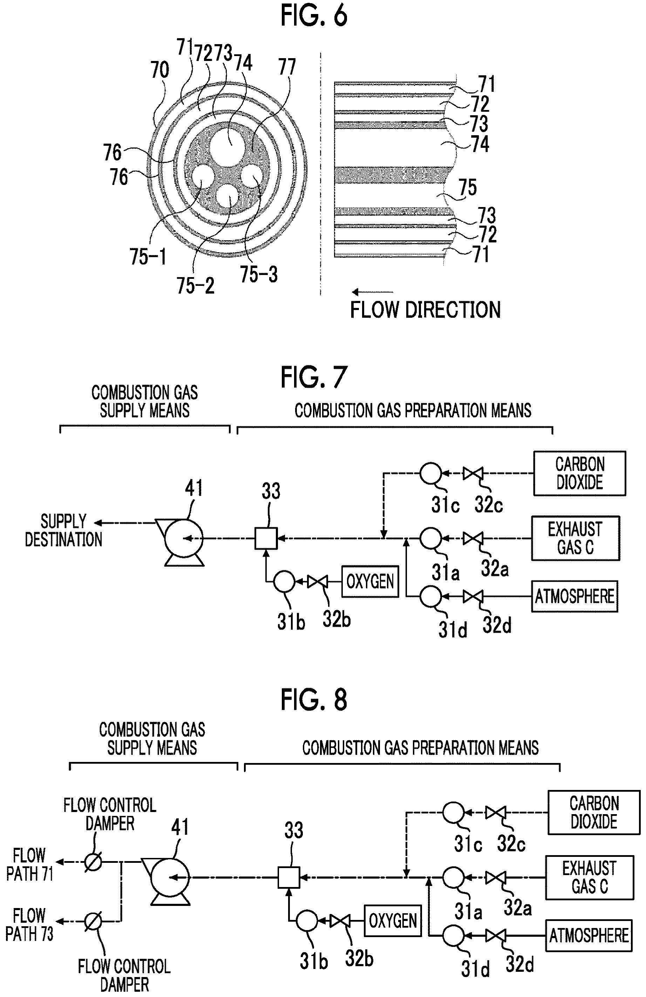

FIG. 6 is a cross-sectional view illustrating one preferable aspect of a shape of a flow path of the rotary kiln burner.

The rotary kiln burner illustrated in FIG. 6 includes a flow path 72, a flow path 74, and flow paths 75-1 to 75-3 as a flow path for fuel supply. In addition, a flow path 71 and a flow path 73 are suitably used as a flow path for gas, and particularly are suitably used as a flow path for combustion gas.

In the rotary kiln burner illustrated in FIG. 6, the flow path 72 is a ring-shaped flow path, and can disperse and eject the fuel. Therefore, the flow path 72 is suitably used as a flow path for the powder-form combustible solid and the mixed gas. In the flow path 72, oxygen in the mixed gas promotes the combustion of the powder-form combustible solid, and contributes to production of a high-temperature flame. Further, by providing a division plate for dispersion in the flow path 72 and providing a spiral angle for the division plate for dispersion, combustion can also be further promoted.

The flow path 74 has a characteristic where clogging is not likely to occur due to the shape, and thus is suitably used as a flow path for the solid-form combustible solid supplied from the fuel supply system different from that of the flow path 72 and the mixed gas. In the flow path 74, oxygen in the mixed gas promotes the combustion of the solid-form combustible solid, and contributes to production of a high-temperature flame. In addition, by providing the flow path 74 in the vicinity of the center of the rotary kiln burner with respect to the other flow paths, preferably, on the inside of the vicinity of the center, a high-temperature portion of a flame can be supplied, which promotes combustion.

The flow paths 75-1 to 75-3 are preferably used as a flow path for supplying the solid-form combustible solid supplied from still another fuel supply system and the mixed gas. By providing the flow paths 75-1 to 75-3 simultaneously, a plurality of solid-form combustible solids can be used. In addition, the combustible liquid and the combustible gas having excellent combustibility may be supplied, and a variety of fuels can be used.

Hereinabove, the burner used for each of the instruments has been described, but the merely preferable example has been described. In order to facilitate the improvement of the calcination efficiency of the suspension pre-heater and the improvement of the firing efficiency of the rotary kiln, for example, the number of flow paths can be counted, and the shape of the flow path can be changed. In addition, for example, by additionally providing, as the burner in the rotary kiln, the burners 50 and 60 illustrated in FIGS. 5-1 to 5-3 that are preferably used as the burner in the suspension pre-heater in the description, the use of the fuel can also be extended.

[Combustion Gas Supply System]

It is preferable that the cement firing facility according to the present embodiment further includes a combustion gas supply system (hereinafter, also referred to as "rotary kiln burner combustion gas supply system") including combustion gas preparation means for extracting partial exhaust gas C from the exhaust gas and mixing the exhaust gas C and oxygen to prepare combustion gas, and combustion gas supply means for supplying the combustion gas to the rotary kiln burner.

The rotary kiln burner combustion gas supply system corresponds to a route of the existing route III, and is a route where the exhaust gas C that is partially extracted from the exhaust gas exhausted from the exhaust gas cooling device is circulated in the rotary kiln burner combustion gas supply system, the rotary kiln, and the suspension pre-heater (refer to the route III in FIG. 3).

As illustrated in FIG. 3, the route III is a route where the fuel is not supplied by the fuel supply means unlike the routes I and II and the combustion gas obtained in the combustion gas preparation means is supplied as it is to the combustion gas flow path of the rotary kiln burner.

As described above, in the rotary kiln, the clinker is fired at a temperature of preferably about 1450°C. Therefore, in the rotary kiln burner, by providing the combustion gas flow path in addition to the fuel supply flow path, a high-temperature stable flame can be formed.

The flow rate and flow velocity of the combustion gas ejected from the flow path 71 and the flow path 73 (refer to FIG. 6) are determined from Expression (6) below by using a momentum (N/MW) per unit fuel combusted in the rotary kiln burner as an index.

$$M_{TE}\ (N/MW) = E_G\ (N)/E_T\ (MW) \quad (6)$$

(In Expression (6), $M_{TE}$ represents the momentum per unit fuel, $E_G$ represents the momentum of the gas flow (amount of gas (kg/s) $\times$ rate (m/s); N), and $E_T$ represents the heating value of the fuel (MW).

In Expression (6), the momentum $M_{TE}$ per unit fuel is preferably 4 N/MW or more and more preferably 6 N/MW or more, and the upper limit thereof is preferably 10 N/MW or less and more preferably 9 N/MW or less. When the momentum $M_{TE}$ per unit fuel is in the above-described range, the mixing of the fuel and the combustion gas can be promoted, and a high-temperature stable flame can be formed.

Regarding the concentration of oxygen in the combustion gas supplied from the combustion gas supply system, it is desirable to set a target value of the oxygen concentration depending on the combustibility of the fuel. The oxygen concentration in the combustion gas is preferably 23% by volume or more, more preferably 25% by volume or more, still more preferably 27% by volume or more, and still more preferably 28% by volume or more, and the upper limit is preferably 40% by volume or less and more preferably 35% by volume or less. When the oxygen concentration is 23% by volume or more, the combustibility of oxygen is improved, the combustion state is improved. Therefore, the flame temperature is improved. On the other hand, when the oxygen concentration is 40% by volume or less, an increase in flame temperature is suppressed, and occurrence of a problem such as fire damage of the facility is suppressed.

FIG. 7 is a schematic diagram illustrating one preferable aspect of the rotary kiln burner combustion gas supply system. The rotary kiln burner combustion gas supply system illustrated in FIG. 7 includes the combustion gas adjustment means for mixing the exhaust gas C and oxygen to prepare combustion gas, and the combustion gas supply means for supplying the adjusted combustion gas to the supply destination.

The combustion gas supplied from the rotary kiln burner combustion gas supply system illustrated in FIG. 7 is supplied to the rotary kiln burner by the combustion gas supply means while allowing the flow control means 2 of the exhaust gas C and the flow control means 2 of oxygen to adjust the flow rate of the exhaust gas and the oxygen concentration in the exhaust gas that are preferably provided. This way, the combustion gas preparation means further includes the flow control means 2 of the exhaust gas C and the flow control means 2 of oxygen such that the concentration of carbon dioxide in the cement firing facility can be increased. Therefore, carbon dioxide can be efficiently recovered in the carbon dioxide recovery device. In addition, by adjusting the flow rate and the oxygen concentration of the combustion gas, a high-temperature stable flame suitable for clinker firing can be formed, and thus the heat efficiency of the cement firing facility is improved. From the same viewpoint as described above, it is also preferable that the combustion gas preparation means includes combustion gas flow control means for performing a flow control of the combustion gas.

In the combustion gas preparation means illustrated in FIG. 7, by adjusting the flow rate of oxygen and the flow rate of the exhaust gas and mixing oxygen and the exhaust gas, the oxygen concentration and the flow rate of the combustion gas can be adjusted to target values.

As described above, a combustion gas flow rate target value Qc (Nm$^3$/h) is determined based on the momentum per unit fuel. Therefore, the combustion gas flow rate target value Qc (Nm$^3$/h) can be determined from Expressions (7) and (8) below using an exhaust gas flow rate target value Qa (Nm$^3$/h), an oxygen flow rate target value Qb (Nm$^3$/h), and an oxygen concentration target value b (%).

$$Qa = Qc \times (100 - b)/100 \quad (7)$$

$$Qb = Qc \times b/100 \quad (8)$$

By adjusting the flow rate oxygen and the flow rate of the exhaust gas to the target values determined from Expressions (7) and (8) above and mixing the exhaust gas and oxygen, combustion gas of which the oxygen concentration and the flow rate are adjusted to the target values can be obtained. When the exhaust gas contains oxygen, the oxygen flow rate target value may be corrected.

A method for adjusting the oxygen flow rate and the exhaust gas flow rate will be described using FIG. 7. FIG. 7 illustrates a state where the combustion gas supply system includes, as the combustion gas preparation means, flowmeters (31a, 31b, 31c, and 31d, respectively) and flow control valves (32a, 32b, 32c, and 32d, respectively) for adjusting flow rates of the exhaust gas C, oxygen, carbon dioxide, and the atmosphere. Oxygen and the exhaust gas of which the flow controls are adjusted are mixed in a mixer 33. As the mixer 33, for example, a mixer such as an inline mixer can be used as in the mixer 13.

The flow rate of oxygen can be adjusted by adjusting the flow control valve 32b such that the value of the flowmeter 31b is a target value, and the flow rate of the exhaust gas can be adjusted by adjusting the flow control valve 32a such that the value of the flowmeter 31a is a target value. The flow control may also be automatically performed. In addition, the same also applies to carbon dioxide and the atmosphere.

As illustrated in FIG. 7, the combustion gas preparation means can mix oxygen with carbon dioxide that is recovered and stored in the carbon dioxide recovery device instead of the exhaust gas C.

For example, when the operation of a cement firing device starts, the exhaust gas circulation is not sufficient, and the carbon dioxide concentration in the circulated exhaust gas may be low. Even in this case, by using the recovered carbon dioxide instead of the exhaust gas C, the carbon dioxide concentration in the circulated exhaust gas can be rapidly increased, and a switching time to a normal operation where the circulated exhaust gas is used for the mixed gas can be reduced.

As illustrated in FIG. 7, the combustion gas preparation means can also use air alone instead of the combustion gas.

As a result, when a problem occurs in the combustion gas preparation means, by switching the combustion gas to air, the supply of the combustion gas can be continued, and the operation of the cement firing facility can be continued. This way, the firing facility according to the present embodiment can also support any circumstances.

In FIG. 3, regarding the route from the exhaust gas cooling device to the mixed gas preparation means, the routes for the exhaust gas B and the exhaust gas C are divided for convenience of description, but may be shared. In addition, when the exhaust gas A, the exhaust gas B, and the exhaust gas C are extracted from the exhaust gas circulation path, the order thereof is not particularly limited.

For example, It is preferable that the combustion gas supply system illustrated in FIG. 7 is provided for each of the supply destinations such as the flow path 71 and the flow path 73 of the rotary kiln burner. As a result, the oxygen concentration and the gas flow rate can be adjusted depending on the flow path. Therefore, a more accurate flame can be adjusted and formed.

In addition, when a plurality of flow paths for supplying the combustion gas are present, as illustrated in FIG. 8, one combustion gas supply system may be provided for the plurality of flow paths such that a device such as a damper that can supply the combustion gas to the plurality of flow paths at a fixed rate is provided to distribute the combustion gas. For example, this configuration can be used for a case where the combustibility of the fuel is excellent and the oxygen concentration does not need to be accurately adjusted depending on the flow path. With this configuration, the number of instruments can be reduced, which is economically advantageous.

[Firing Method in Cement Firing Facility] According to the present embodiment, there is provided a firing method in a cement firing facility including

a drying and grinding device configured to dry and grind a cement raw material to obtain a powder material,
a suspension pre-heater configured to pre-heat and calcinate the powder material,
a rotary kiln configured to fire the pre-heated and calcinated powder material to obtain a cement clinker,
a clinker cooler configured to cool the cement clinker,
an exhaust gas cooling device configured to cool exhaust gas exhausted from the suspension pre-heater,
an exhaust gas circulation path that includes an oxygen adding device configured to add oxygen to the exhaust gas cooled in the exhaust gas cooling device and where the exhaust gas to which oxygen is added in the oxygen adding device is circulated and used as cooling gas of the clinker cooler,
a carbon dioxide recovery device configured to extract partial exhaust gas A from the exhaust gas that is cooled in the exhaust gas cooling device and to which oxygen is not yet added in the oxygen adding device, and to recover carbon dioxide from the exhaust gas A, and
a fuel supply system including mixed gas preparation means for extracting partial exhaust gas B from the exhaust gas and mixing the exhaust gas B and oxygen to prepare mixed gas, and fuel supply means for inserting fuel into the mixed gas to supply the mixed gas including the fuel,
the firing method including performing the pre-heating and calcination of the powder material and the firing of the pre-heated and calcinated powder material using the fuel supply system.

In the firing method in the cement firing facility according to the present embodiment, the cement raw material is fired using the fuel supply system in the cement firing facility according to the present embodiment. Therefore, with the firing method in the cement firing facility according to the present embodiment, the concentration of carbon dioxide exhausted from the cement firing facility can be increased, the exhaust amount of the combustion exhaust gas including carbon dioxide can be reduced to efficiently recover carbon dioxide, and the heat efficiency can be improved.

This way, in the firing method in the cement firing facility according to the present embodiment, the cement raw material is fired using the fuel supply system in the cement firing facility according to the present embodiment, and thus the details thereof are described above.

Examples

Hereinafter, the present invention will be described in detail using Examples, but is not limited to the following Examples.

(Comparative Example 1)

The cement firing facility having the configuration of the flowchart illustrated in FIG. 1 was used. As each of the burner (rotary kiln burner) in the rotary kiln and the burner (suspension pre-heater burner) in the suspension pre-heater, a burner having a cross-sectional shape illustrated in FIGS. 5-1 to 5-3 was used.

Fuels shown in the first table were supplied to the rotary kiln burner and the suspension pre-heater burner. At this time, air was used as gas for fuel supply, air was used as combustion gas to be supplied to the rotary kiln burner, and air was used as gas for cooling a clinker. In addition, the clinker firing temperature was maintained at 1450°C, the calcination temperature was maintained at 880°C, and air for cooling was supplied to cool the clinker to 160°C in the clinker cooler.

(Comparative Example 2)

The cement firing facility having the configuration of the flowchart illustrated in FIG. 2 was used. In addition to the cement firing facility having the configuration of the flowchart illustrated in FIG. 1 and used in Comparative Example 1, a path where the exhaust gas was circulated in the clinker cooler and a carbon dioxide recovery device were provided.

Fuels shown in the first table were supplied to the rotary kiln burner and the suspension pre-heater burner. The composition of the cooling gas of the clinker cooler containing the circulated exhaust gas is as shown in the first table.

(Example 1)

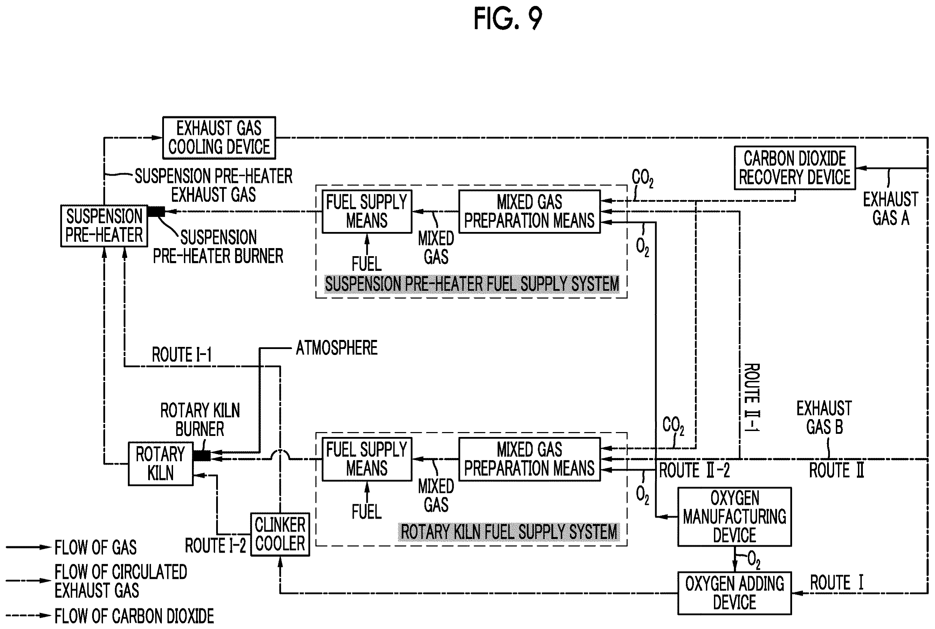

The cement firing facility having the configuration of the flowchart illustrated in FIG. 9 was used. In addition to the cement firing facility having the configuration of the flowchart illustrated in FIG. 1 and used in Comparative Example 2, the fuel supply system was provided in each of the rotary kiln burner and the suspension pre-heater. Fuels shown in the first table were supplied to the rotary kiln burner and the suspension pre-heater burner. In this case, the composition of the mixed gas is as shown in the first table.

(Example 2)

The cement firing facility having the configuration of the flowchart illustrated in FIG. 3 was used. In addition to the cement firing facility having the configuration of the flowchart illustrated in FIG. 1 and used in Example 1, the combustion gas supply system for supplying the combustion gas to the rotary kiln burner was provided. Fuels shown in the first table were supplied to the rotary kiln burner and the suspension pre-heater burner. In this case, the composition of the combustion gas is as shown in the first table.

[Table 2]

| First Table | | | Comparative Example 1 | | | tomparative Example 2 | | | Example 1 | | | Example 2 | | |
|---|---|---|---|---|---|---|---|---|---|---|---|---|---|---|
| | | | K | SP | Total | K | SP | Total | K | SP | Total | K | SP | Total |
| Amount of Fuel Used | | | | | | | | | | | | | | |
| Fuel 1 | | ton/h | 3.00 | 1.00 | 4.00 | 3.00 | 1.00 | 4.00 | 2.97 | 0.99 | 3.96 | 2.94 | 0.99 | 3.93 |
| Fuel 2 | | ton/h | 0.50 | 0.00 | 0.50 | 0.50 | 0.00 | 0.50 | 0.50 | 0.00 | 0.50 | 0.50 | 0.00 | 0.50 |
| Fuel 3 | | ton/h | 0.00 | 1.50 | 1.50 | 0.00 | 1.50 | 1.50 | 0.00 | 1.50 | 1.50 | 0.00 | 1.50 | 1.50 |
| Amount of Mixed Gas Used | | ton/h | | | | | | | | | | | | |
| For Fuel 1 | | ton/h | 1.9 | 0.6 | 2.5 | 1.9 | 0.6 | 2.5 | 1.9 | 0.6 | 2.5 | 1.9 | 0.6 | 2.5 |
| For Fuel 2 | | ton/h | 1.0 | - | 1.0 | 1.0 | - | 1.0 | 1.0 | - | 1.0 | 1.0 | - | 1.0 |
| For Fuel 3 | | ton/h | - | 3.0 | 3.0 | - | 3.0 | 3.0 | - | 3.0 | 3.0 | - | 3.0 | 3.0 |
| Gas Composition | Gas for Cooling Clinker Cooler | $O_2$ | 21 | 21 | - | 30 | 30 | - | 30 | 30 | - | 30 | 30 | - |
| | | $N_2$ | 79 | 79 | - | 5 | 5 | - | 5 | 5 | - | 5 | 5 | - |
| | | $CO_2$ | - | - | - | 65 | 65 | - | 65 | 65 | - | 65 | 65 | - |
| | Mixed Gas for Thermal Energy Supply System | $O_2$ | 21 | 21 | - | 21 | 21 | - | 30 | 30 | - | 30 | 30 | - |
| | | $N_2$ | 79 | 79 | - | 79 | 79 | - | 5 | 5 | - | 5 | 5 | - |
| | | $CO_2$ | - | - | - | - | - | - | 65 | 65 | - | 65 | 65 | - |
| | Rotary Kiln Combustion Gas | $O_2$ | 21 | - | - | 21 | - | - | 21 | - | - | 30 | - | - |
| | | $N_2$ | 79 | - | - | 79 | - | - | 79 | - | - | 5 | - | - |
| | | $CO_2$ | - | - | - | - | - | - | - | - | - | 65 | - | - |
| | Combustion Gas | $O_2$ | 5 | 5 | 5 | 6 | 6 | 6 | 6 | 6 | 6 | 6 | 6 | 6 |
| | | $N_2$ | 76 | 72 | 75 | 17 | 21 | 18 | 11 | 4 | 9 | 5 | 4 | 5 |
| | | $CO_2$ | 12 | 13 | 12 | 68 | 60 | 65 | 74 | 75 | 74 | 80 | 75 | 78 |
| | | $H_2O$ | 6 | 10 | 7 | 9 | 14 | 11 | 9 | 15 | 11 | 9 | 15 | 11 |
| Temperature Conditions | | | | | | | | | | | | | | |
| Clinker Firing Temperature | | °C | 1450 | | | 1450 | | | 1450 | | | 1450 | | |

(continued)

First Table

| | | | Comparative Example 1 | | | Comparative Example 2 | | | Example 1 | | | Example 2 | | |
|---|---|---|---|---|---|---|---|---|---|---|---|---|---|---|
| | | | K | SP | Total | K | SP | Total | K | SP | Total | K | SP | Total |
| Calcination Temperature | | °C | 880 | | | 880 | | | 880 | | | 880 | | |
| Clinker Cooling Temperature | | °C | 160 | | | 160 | | | 160 | | | 160 | | |
| | CO$_2$ Concentration | - | 100 | 100 | 100 | 567 | 462 | 542 | 617 | 577 | 617 | 667 | 577 | 650 |
| | Amount of Combustion Exhaust Gas | - | 100 | 100 | 100 | 72 | 75 | 73 | 69 | 70 | 70 | 65 | 70 | 66 |
| | Amount of Fuel 1 Used | - | 100 | 100 | 100 | 100 | 100 | 100 | 99 | 99 | 99 | 98 | 99 | 98 |
| | Solid-to-Gas Ratio | - | | | | | | | | | | | | |
| Comparison | Fuel 1 | - | 1.6 | 1.7 | - | 1.6 | 1.7 | - | 1.6 | 1.7 | - | 1.5 | 1.7 | - |
| | Fuel 2 | - | 0.5 | - | - | 0.5 | - | - | 0.5 | - | - | 0.5 | - | - |
| | Fuel 3 | - | - | 0.5 | - | - | 0.5 | - | - | 0.5 | - | - | 0.5 | - |

Note) In the first table, "K" represents the rotary kiln, and "SP" represents the suspension pre-heater. In addition, the solid-to-gas ratio m is a ratio between fuel 1 and the mixed gas.

Fuels 1 to 3 used in Examples and Comparative Examples are as described below.

· Fuel 1: a combustible solid (ground coal product: 25. 7 GJ/t, containing 85% by mass of matter passed through a sieve (pore size: 90 $\mu$m)

· Fuel 2: a combustible solid (waste plastic crushed product: 33.1 GJ/t, product passed through a 40 mm screen)

· Fuel 3: a combustible solid (wood chips crushed product: 14.4 GJ/t, product passed through a 40 mm screen)

Regarding Examples 1 and 2 and Comparative Examples 1 and 2, the composition and the total flow rate of the exhaust gas produced by combustion of the fuel in the rotary kiln and the suspension pre-heater are shown in the first table. According to the results of the first table, when the concentration of carbon dioxide in the exhaust gas in the rotary kiln was 100 in Comparative Example 1, the carbon dioxide concentrations of Examples 1 and 2 were 617 and 650, respectively, and it was found that the concentration of carbon dioxide was improved by 6 times or more. In addition, when the concentration of carbon dioxide in the combustion exhaust gas in the suspension pre-heater was 100 in Comparative Example 1, both of the carbon dioxide concentrations of Examples 1 and 2 were 577, and it was found that the concentration of carbon dioxide was improved by slightly less than 6 times.

When the total flow rate of the combustion exhaust gas in the rotary kiln and the combustion exhaust gas in the suspension pre-heater was 100 in Comparative Example 1, the flow rates of Examples 1 and 2 were 70 and 66, respectively, and it was found that the flow rate of the combustion exhaust gas was decreased by 30% or more.

Further, as a result of the improvement of the combustibility, the amount of coal used was decreased to 99 in Example 1, and the amount of coal used was decreased to 98 in Example 2.

It was from the above results that, in the cement firing facility according to the present embodiment, the carbon dioxide concentration to be exhausted can be improved, the exhaust amount of the combustion exhaust gas including carbon dioxide can be reduced, and the heat efficiency can be improved.

**Claims**

1. A cement firing facility comprising:

   a drying and grinding device configured to dry and grind a cement raw material to obtain a powder material;
   a suspension pre-heater configured to pre-heat and calcinate the powder material;
   a rotary kiln configured to fire the pre-heated and calcinated powder material to obtain a cement clinker;
   a clinker cooler configured to cool the cement clinker;
   an exhaust gas cooling device configured to cool exhaust gas exhausted from the suspension pre-heater;
   an exhaust gas circulation path that includes an oxygen adding device configured to add oxygen to the exhaust gas cooled in the exhaust gas cooling device and where the exhaust gas to which oxygen is added in the oxygen adding device is circulated and used as cooling gas of the clinker cooler;
   a carbon dioxide recovery device configured to extract partial exhaust gas A from the exhaust gas that is cooled in the exhaust gas cooling device and to which oxygen is not yet added in the oxygen adding device, and to recover carbon dioxide from the exhaust gas A; and
   a fuel supply system including mixed gas preparation means for extracting partial exhaust gas B from the exhaust gas and mixing the exhaust gas B and oxygen to prepare mixed gas, and fuel supply means for inserting fuel into the mixed gas to supply the mixed gas including the fuel.

2. The cement firing facility according to Claim 1, wherein the fuel is a combustible solid.

3. The cement firing facility according to Claim 2, wherein the combustible solid is at least one selected from fossil fuel, a combustible waste, and renewable fuel.

4. The cement firing facility according to Claim 1 or 2, wherein the mixed gas preparation means includes flow control means 1 of the exhaust gas B and flow control means 1 of the oxygen.

5. The cement firing facility according to Claim 1 or 2, wherein the mixed gas preparation means includes mixed gas flow control means for performing a flow control of the mixed gas.

6. The cement firing facility according to Claim 1 or 2, wherein the mixed gas preparation means further includes means for mixing carbon dioxide recovered in the carbon dioxide recovery device.

7. The cement firing facility according to Claim 1 or 2, wherein a supply destination of the mixed gas including the fuel is at least one selected from a burner in the suspension pre-heater and a burner in the rotary kiln.

8. The cement firing facility according to Claim 1 or 2, further comprising a combustion gas supply system including combustion gas preparation means for extracting partial exhaust gas C from the exhaust gas and mixing the exhaust gas C and oxygen to prepare combustion gas, and combustion gas supply means for supplying the combustion gas to a burner in the rotary kiln.

9. The cement firing facility according to Claim 8, wherein the combustion gas preparation means includes flow control means 2 of the exhaust gas C and flow control means 2 of the oxygen.

10. The cement firing facility according to Claim 8, wherein the combustion gas preparation means includes combustion gas flow control means for performing a flow control of the combustion gas.

11. The cement firing facility according to Claim 8, wherein the combustion gas preparation means further mixes the carbon dioxide recovered in the carbon dioxide recovery device.

12. A firing method in a cement firing facility including

   a drying and grinding device configured to dry and grind a cement raw material to obtain a powder material,
   a suspension pre-heater configured to pre-heat and calcinate the powder material,
   a rotary kiln configured to fire the pre-heated and calcinated powder material to obtain a cement clinker,
   a clinker cooler configured to cool the cement clinker,
   an exhaust gas cooling device configured to cool exhaust gas exhausted from the suspension pre-heater,
   an exhaust gas circulation path that includes an oxygen adding device configured to add oxygen to the exhaust gas cooled in the exhaust gas cooling device and where the exhaust gas to which oxygen is added in the oxygen adding device is circulated and used as cooling gas of the clinker cooler,
   a carbon dioxide recovery device configured to extract partial exhaust gas A from the exhaust gas that is cooled in the exhaust gas cooling device and to which oxygen is not yet added in the oxygen adding device, and to recover carbon dioxide from the exhaust gas A, and
   a fuel supply system including mixed gas preparation means for extracting partial exhaust gas B from the exhaust gas and mixing the exhaust gas B and oxygen to prepare mixed gas, and fuel supply means for inserting fuel into the mixed gas to supply the mixed gas including the fuel,
   the firing method comprising performing the pre-heating and calcination of the powder material and the firing of the pre-heated and calcinated powder material using the fuel supply system.

13. The firing method in the cement firing facility according to Claim 12,

   wherein the cement firing facility further includes a combustion gas supply system including combustion gas preparation means for extracting partial exhaust gas C from the exhaust gas and mixing the exhaust gas C and oxygen to prepare combustion gas, and combustion gas supply means for supplying the combustion gas to a burner in the rotary kiln, and
   the combustion gas is supplied to the burner in the rotary kiln using the combustion gas supply system.

# FIG. 1

# FIG. 2

# FIG. 3

CARBON DIOXIDE RECOVERY DEVICE

EXHAUST GAS A

EXHAUST GAS C

ROUTE III

EXHAUST GAS B

ROUTE II

ROUTE I

ROUTE II-1

ROUTE II-2

OXYGEN MANUFACTURING DEVICE

$O_2$

OXYGEN ADDING DEVICE

$CO_2$ $O_2$

$CO_2$ $O_2$

$CO_2$ $O_2$

MIXED GAS PREPARATION MEANS

COMBUSTION GAS PREPARATION MEANS

MIXED GAS PREPARATION MEANS

SUSPENSION PRE-HEATER FUEL SUPPLY SYSTEM

ROTARY KILN BURNER COMBUSTION GAS SUPPLY SYSTEM

ROTARY KILN FUEL SUPPLY SYSTEM

MIXED GAS

MIXED GAS

FUEL SUPPLY MEANS

COMBUSTION GAS SUPPLY MEANS

FUEL SUPPLY MEANS

FUEL

FUEL

EXHAUST GAS COOLING DEVICE

SUSPENSION PRE-HEATER EXHAUST GAS

SUSPENSION PRE-HEATER BURNER

SUSPENSION PRE-HEATER

ROUTE I-1

ROTARY KILN BURNER

ROTARY KILN

CLINKER COOLER

ROUTE I-2

FLOW OF GAS

FLOW OF CIRCULATED EXHAUST GAS

FLOW OF CARBON DIOXIDE

20

# FIG. 4

FUEL SUPPLY MEANS       MIXED GAS PREPARATION MEANS

CARBON DIOXIDE

11c 12c

EXHAUST GAS B

11a 12a

OXYGEN

11b 12b

ATMOSPHERE

11d 12d

23

22

24

21

13

SUPPLY DESTINATION

# FIG. 5-1

FUEL SUPPLY SYSTEM

FLOW CONTROL DAMPER

# FIG. 5-2

50   51

50

FLOW DIRECTION

# FIG. 5-3

60 61 62

62

62

63

64

60

61

63

FLOW DIRECTION

# FIG. 6

70 71 72 73 74 77

76
76

75-1 75-2 75-3

71
72
73
74
75
73
72
71

← FLOW DIRECTION

# FIG. 7

COMBUSTION GAS
SUPPLY MEANS

COMBUSTION GAS PREPARATION MEANS

SUPPLY
DESTINATION ← 41

33

CARBON
DIOXIDE

31c  32c

EXHAUST
GAS C

31a  32a

OXYGEN

31b  32b

ATMOSPHERE

31d  32d

# FIG. 8

COMBUSTION GAS
SUPPLY MEANS

COMBUSTION GAS PREPARATION MEANS

FLOW CONTROL
DAMPER

FLOW
PATH 71 ←

FLOW
PATH 73 ←

FLOW CONTROL
DAMPER

41

33

CARBON
DIOXIDE

31c  32c

EXHAUST
GAS C

31a  32a

OXYGEN

31b  32b

ATMOSPHERE

31d  32d

# FIG. 9

EXHAUST GAS COOLING DEVICE

CARBON DIOXIDE RECOVERY DEVICE

SUSPENSION PRE-HEATER EXHAUST GAS

$CO_2$

EXHAUST GAS A

SUSPENSION PRE-HEATER

SUSPENSION PRE-HEATER BURNER

FUEL SUPPLY MEANS

MIXED GAS PREPARATION MEANS

MIXED GAS

$O_2$

FUEL

SUSPENSION PRE-HEATER FUEL SUPPLY SYSTEM

ROUTE I-1

ATMOSPHERE

ROTARY KILN BURNER

ROUTE II-1

$CO_2$

EXHAUST GAS B

ROTARY KILN

FUEL SUPPLY MEANS

MIXED GAS PREPARATION MEANS

ROUTE II-2

ROUTE II

MIXED GAS

$O_2$

FUEL

ROTARY KILN FUEL SUPPLY SYSTEM

OXYGEN MANUFACTURING DEVICE

CLINKER COOLER

ROUTE I-2

$O_2$

OXYGEN ADDING DEVICE

ROUTE I

→ FLOW OF GAS

→ FLOW OF CIRCULATED EXHAUST GAS

---→ FLOW OF CARBON DIOXIDE

EP 4 678 614 A1

23

## INTERNATIONAL SEARCH REPORT

| International application No. |
|---|
| **PCT/JP2024/007145** |

**A. CLASSIFICATION OF SUBJECT MATTER**

*C04B 7/44*(2006.01)i; *B01D 53/62*(2006.01)i; *B01D 53/74*(2006.01)i; *B01D 53/78*(2006.01)i; *B01D 53/81*(2006.01)i; *C04B 7/38*(2006.01)i

FI: C04B7/44 ZAB; B01D53/62; B01D53/74; B01D53/78; B01D53/81; C04B7/38

According to International Patent Classification (IPC) or to both national classification and IPC

**B. FIELDS SEARCHED**

Minimum documentation searched (classification system followed by classification symbols)

C04B7/00-7/60; B01D53/00-53/96; F27B1/00-21/14; F27D1/00-99/00; F28C1/00-3/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-44130 A (TAIHEIYO CEMENT CORPORATION) 17 March 2022 (2022-03-17) entire text | 1-13 |
| A | JP 2021-195270 A (MITSUBISHI MATERIALS CORPORATION) 27 December 2021 (2021-12-27) entire text | 1-13 |
| A | JP 2011-529844 A (FIVES FCB) 15 December 2011 (2011-12-15) entire text | 1-13 |
| A | US 2012/0174832 A1 (MATHAI, Robert) 12 July 2012 (2012-07-12) entire text | 1-13 |
| A | CN 114262170 A (TIANJIN CEMENT INDUSTRY DESIGN RESEARCH INSTITUTE LIMITED COMPANY) 01 April 2022 (2022-04-01) entire text | 1-13 |

☑ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 April 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
|---|
| **PCT/JP2024/007145** |

**C.    DOCUMENTS CONSIDERED TO BE RELEVANT**

| Category* | Citation of document, with indication, where appropriate, of the relevant passages | Relevant to claim No. |
|---|---|---|
| A | JP 2008-239359 A (SUMITOMO OSAKA CEMENT CO., LTD.) 09 October 2008 (2008-10-09)<br>      entire text | 1-13 |

Form PCT/ISA/210 (second sheet) (July 2022)

| Patent document cited in search report | | | Publication date (day/month/year) | Patent family member(s) | | | Publication date (day/month/year) |
|---|---|---|---|---|---|---|---|
| JP | 2022-44130 | A | 17 March 2022 | (Family: none) | | | |
| JP | 2021-195270 | A | 27 December 2021 | US<br>entire text<br>WO<br>EP<br>CN | 2023/0233987<br><br>2021/246317<br>4163266<br>115697904 | A1<br><br>A1<br>A1<br>A | |
| JP | 2011-529844 | A | 15 December 2011 | US<br>entire text<br>WO<br>EP<br>CN | 2011/0113988<br><br>2010/012880<br>2304363<br>102112834 | A1<br><br>A1<br>A1<br>A | |
| US | 2012/0174832 | A1 | 12 July 2012 | WO<br>EP<br>CN | 2011/029690<br>2475946<br>102472581 | A1<br>A1<br>A | |
| CN | 114262170 | A | 01 April 2022 | (Family: none) | | | |
| JP | 2008-239359 | A | 09 October 2008 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018052746 A
- JP 2008239359 A